# EUROPEAN PATENT APPLICATION

(11) **EP 2 007 083 A2**
(43) Date of publication of application: **24.12.2008**
(21) Application number: 07720504.5
(22) Date of filing: 22.03.2007
(51) Int. Cl.: H04L 12/56, H04Q 7/38

(54) **A METHOD AND APPARATUS FOR CONTROLLING BEARER OF SERVICE DATA FLOWS**

(30) Priority: 27.03.2006 CN 200610065930
(71) Applicant: Huawei Technologies Co., Ltd., Shenzhen, Guangdong Province 518129 (CN)
(72) Inventor: HU, Huadong, Shenzhen Guangdong 518129 (CN); DUAN, Xiaoqin, Shenzhen Guangdong 518129 (CN); SUN, Chengzhen, Shenzhen Guangdong 518129 (CN); LIU, Lan, Shenzhen Guangdong 518129 (CN); LI, Ming, Shenzhen Guangdong 518129 (CN)
(74) Representative: Haley, Stephen
(86) International application number: PCT/CN2007/000930
(87) International publication number: WO 2007/109982

(57) **Abstract**

Embodiments of the present invention provide a method and apparatus for controlling bearers of service data flows, including acquiring a service data flow convergence of service data flows, determining whether the service data flow convergence is able to be multiplexed to an established bearer, and carrying the service data flow convergence in a corresponding bearer according to the determined result. The apparatus of the present invention includes a service data flow convergence acquiring module and a service data flow convergence multiplex handling module for implementing the method of the present invention. In accordance with the method and apparatus of the present invention, it is possible to reduce the bearer information amount necessary to be maintained by various network entities and save the storage and handling resources of system.

## Description

### Field of the Invention

The present invention relates to the field of communications, and particularly to a method and an apparatus for controlling bearers of service data flows.

### Background of the Invention

To guarantee that a communication network is an operable network, it is necessary to accurately and completely control services in a communication network and resources used by the services in time. The policy and charging control for services is a foremost one of the above-mentioned controls.

Before the Third Generation Partnership Projects release 7 (3GPP release 7), the policy control of some typical access technologies including the Universal Terrestrial Radio Access Network (UTRAN), GSM/EDGE Radio Access Network (GERAN) and Interworking Wireless Local Area Network (I-WLAN) is implemented by the Service Based Local Policy (SBLP), and the charging function is implemented by the Flow Based Charging (FBC). In the 3GPP release 7 system, policy and charging functions are implemented by a Policy and Charging Control (PCC) architecture.

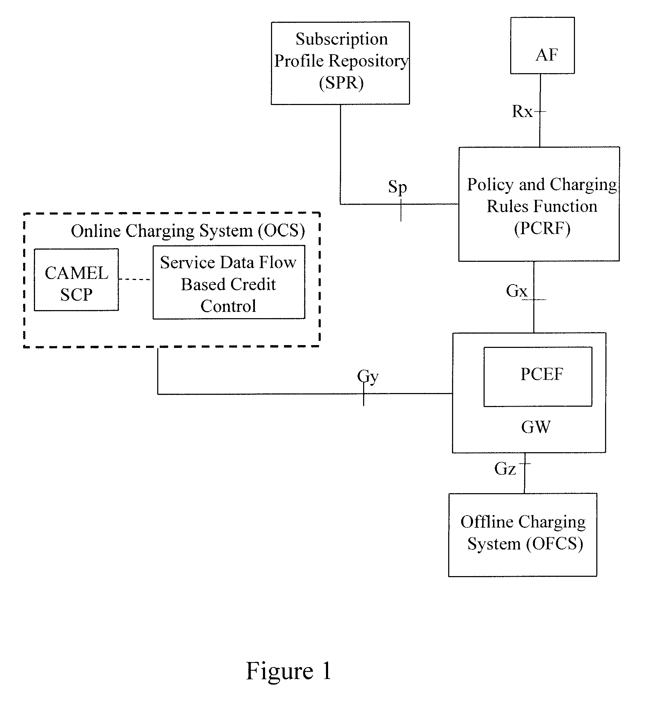

The PCC architecture in the 3GPP release 7 is as shown in Figure 1. The PCC architecture is a functional architecture applicable to various access technologies, which integrates basic functions of the SBLP and the FBC and enhances some functions of the SBLP and the FBC. For example, the PCC architecture implements the policy and charging control on the basis of user's subscription information, and updates a binding mechanism between service data flow and bearer used by services.

By a PCC architecture as shown in Figure 1, an operator may associate a service and a bearer used by the service, and implement a complete operation towards service data flow based policy and charging control according to user's subscription information.

A Policy and Charging Rules Function (PCRF) is a core functional entity in the PCC architecture. The PCRF constitutes PCC rules, and controls service bearers by enforcing such rules. To constitute necessary PCC rules accurately, the PCRF acquires service information from an Application Function (AF), user's subscription profile information from a Subscription Profile Repository (SPR), and bearer information from a gateway.

In the PCC architecture as shown in Figure 1, the Policy and Charging Enforcement Function (PCEF) is an entity for enforcing rules constituted by the PCRF. The PCEF is typically disposed in a service gateway of various bearer networks, for example, a Gateway GPRS Support Node (GGSN) in General Packet Radio Service (GPRS), a Packet Data Gateway (PDG) in an I-WLAN, and a Packet Data Support Node (PDSN) in a 3GPP2 network.

The PCC architecture may be applied to not only some existing mobile communication networks, but also future evolution networks.

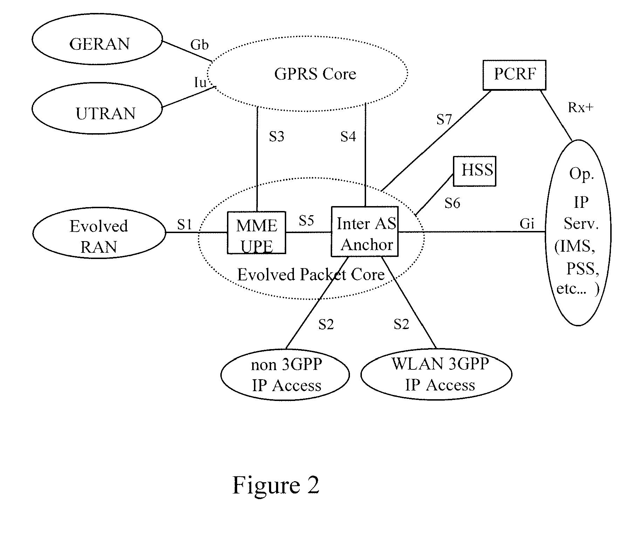

To guarantee the competitive power of a 3GPP system, especially to enforce the capability of a 3GPP system to handle the rapidly increasing IP data services, the 3GPP organization is endeavoring to evolve access technologies. A schematic diagram illustrating the current 3GPP evolution network architecture is shown in Figure 2. The several foremost parts of the technology evolution include: reducing delay, increasing user data rate, enhancing system capacity and coverage range as well as reducing the total cost of operators. In addition, the evolution network architecture is also an important guideline for the backward compatibility of the existing network.

In an evolution network architecture as shown in Figure 2, a core network mainly includes three logical modules: a Mobility Management Entity (MME), a User Plane Entity (UPE) and an Inter Access System Anchor (Inter AS Anchor). The MME is a mobile management module responsible for the mobility management of the control plane. The mobility management includes user context and mobile status management, user temporary identity allocation and security function, etc. The MME corresponds to the control plane part of Serving GPRS Support Node (SGSN) within the current UMTS system. The UPE is a user plane entity adapted to page for the downlink data in an idle state, manage and store IP bearer parameters and network route information. The UPE corresponds to the data plane part of SGSN and GGSN within the current UMTS system. The Inter AS Anchor serves as a user plane anchor between different access systems.

In an evolution network architecture as shown in Figure 2, the PCC architecture is used for policy control and charging operations. The location of a PCEF is not specified in the evolution network architecture. The PCEF may be implemented in the MME/UPE, Inter AS Anchor or both in the MME/UPE and Inter AS Anchor. No matter how the location of the PCEF changes, the current PCC architecture basically keeps unchanged.

A method for controlling bearers of service data flows in the prior art is that the establishment of bearers and Quality of Service (QoS) of bearers are mainly controlled by a User Equipment (UE) in the conventional GPRS technology. To enable an operator to control services and network resources better, it is proposed in some current solutions to change a bearer control mode mainly controlled by the UE into a bearer control mode mainly controlled by the network.

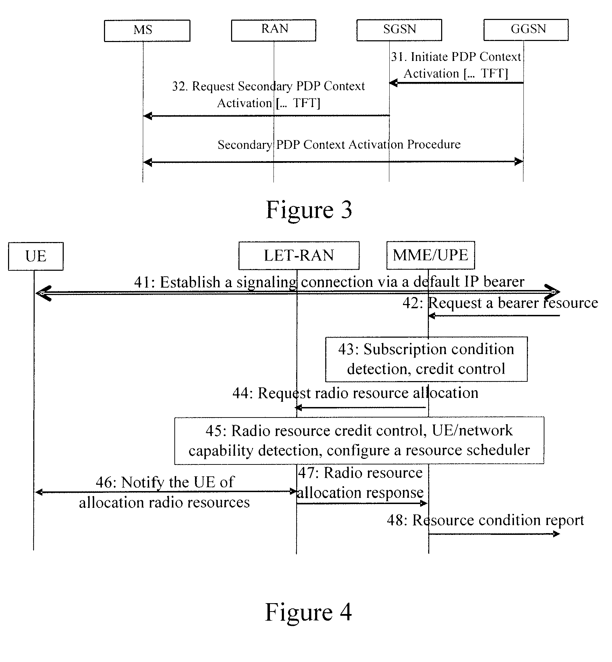

As shown in Figure 3, a bearer establishment procedure triggered by the network in a bearer establishment solution is as follows.

Step 31: A GGSN sends an initial Packet Data Protocol (PDP) context activation message to an SGSN. The message carries parameters such as a Network Service Access Point Identifier (NSAPI), a QoS request, a Traffic Flow Template (TFT) and a protocol configuration option. The parameters are transmitted to the SGSN transparently.

Step 32: Upon receiving the initial PDP context activation message, the SGSN sends a secondary PDP context activation request message to a Mobile Station (MS). The message carries a Transaction Identifier (TI), a QoS request, the TFT and the protocol configuration option.

Step 33: Upon receiving the secondary PDP context activation request message, the MS initiates a secondary PDP context activation procedure; the values of the TI, the QoS request, the TFT and the protocol configuration option carried in the secondary PDP context activation procedure are the same as the values of the corresponding parameters received by the MS from the SGSN.

In the bearer establishment solution, the binding relation between a service and a bearer is determined by the PCRF or the GGSN in the network side, and the MS is notified of the binding relation by means of the TFT. In addition, the QoS information required by the service is determined by the PCRF in the network side, and the MS is notified of the QoS information carried in a QoS request parameter.

In the bearer establishment solution as shown in Figure 3, the whole bearer establishment procedure is trigger by the GGSN, but the final bearer establishment process (Step 33) is initiated by the MS. In addition, the messages adapted in Steps 31 and 32 may be implemented by extending the existing protocol.

Another bearer establishment solution in which the bearer establishment procedure is initiated directly by the network is also provided in a System Architecture Evolution (SAE). As shown in Figure 4, the bearer establishment procedure in the bearer establishment solution is as follows.

Step 41: A UE establishes a signaling connection with the network side via a default IP bearer.

Step 42: An MME/UPE receives a resource request carrying policy information or QoS information requested by the corresponding service.

Step 43: The MME/UPE detects the subscription information of the UE, performs access license control, and enforces the policy information received.

Step 44: The MME/UPE initiates a resource establishment procedure at the LTE-RAN side.

Step 45: The LTE-RAN enforces the access license control, converts the received QoS information into the QoS information of the radio side, and enforces the corresponding scheduling configuration by using the converted QoS information.

Step 46: The LTE-RAN transmits the radio resource configuration information for the service of the UE and the binding information for binding the IP session flow with the related radio resources to the UE.

Step 47: After the resource is established successfully, the MME/UPE receives a corresponding notification message.

Step 48: The MME/UPE notifies the corresponding functional entity of the resource establishment (including the QoS information negotiated).

In the bearer establishment mode as shown in Figure 4, an SAE bearer between the UE and the MME/UPE is triggered by a message initiated by the PCRF or the Inter-AS Anchor.

The defect of the method for controlling bearers of service data flows in the above prior art is that: in the GPRS, PCC or SAE, a mode for a PCEF to handle a bearer based on the service data flows provided by the PCRF, a convergence mode for the service data flow, and a multiplexing and establishment mode of bearers are not described in detail.

### Summary of the Invention

The embodiments of the present invention provide a method and an apparatus for controlling bearers of service data flows, so as to reduce the bearer information amount that needs to be maintained by various network entities and save the storage and handling resources of system.

The embodiments of the present invention are implemented by the following technical solution:
An embodiment of the present invention provides a method for controlling a bearer of a service data flow, including:
   acquiring, by a policy and charging enforcement function entity, service data flow convergence; and
   determining whether the service data flow convergence is able to be multiplexed to an established bearer, and bearing the service data flow convergence in a bearer according to the determining result.

An embodiment of the present invention provides an apparatus for controlling bearing of service data flows, including:
a service data flow convergence acquiring module adapted to acquire the service data flow convergence of service data flows, and transmit the service data flow convergence to a service data flow convergence multiplex handling module; and
a service data flow convergence multiplex handling module adapted to determine whether the service data flow convergence transmitted by the service data flow convergence acquiring module is able to multiplexed to an established bearer, and carry the service data flow convergence in a bearer according to the determining result.

As can be seen from the technical solution provided by embodiments of the present invention, by converging the service data flows with the same attributes (For example, QoS class, priority and bandwidth) and multiplexing a service data flow convergence to an established bearer, it is possible to reduce the bearer information amount that needs to be maintained by various network entities and save the storage and handling resources of system, thereby making the bearer binding of new service data flows more flexible. In addition, the service data flows can be transmitted between a terminal and the network directly via the established bearer by multiplexing the service data flow convergence to the established bearer instead of establishing a new bearer, which quickens establishing a service based on the bearer greatly, thereby improves the service experience of subscription users.

### Brief Description of the Drawings

Figure 1 is a schematic diagram illustrating an overall PCC architecture of the 3GPP release7 in the prior art;
Figure 2 is a schematic diagram illustrating a 3GPP evolution network architecture in the prior art;
Figure 3 is a schematic diagram illustrating a bearer establishment mode triggered by the network in the prior art;
Figure 4 is a flowchart for a bearer establishment initiated by the network proposed in an SAE in the prior art;
Figure 5 is a flowchart illustrating a method in an embodiment of the present invention;
Figure 6 is flowchart of a bearer modification procedure in the GPRS in an embodiment of the present invention;
Figure 7 is a flowchart of a bearer establishment procedure initiated by the network proposed in an SAE in an embodiment of the present invention;
Figure 8 is a flowchart of establishing a bearer initiated by a UE in the GPRS in an embodiment of the present invention; and
Figure 9 is a schematic diagram illustrating the structure of a PCEF in an embodiment of the present invention.

### Detailed Description of the Embodiments

The embodiments of the preset invention provide a method and an apparatus for controlling bearing of service data flows. Service data flows with the same related attributes are converged and multiplexed to an established bearer or a newly established bearer.

In an embodiment of the present invention, a service data flow may be identified by a service data flow template. The service data flow template may be a TFT in the GPRS or a group of flow filters similar to an IP quintuple (source and destination IP addresses, source and destination port numbers and protocol number). The service data flow template matches the attributes (IP address, port number, etc.) of a data packet with the attributes of the service data flow template to distinguish which service data flow the data packet belongs to. In the embodiments of the preset invention, the identity of the UE to which a service data flow belongs may be an IP address, or a Mobile Station international ISDN number (MSISDN) or an International Mobile Subscriber Identity (IMSI), etc.

All IP flows of a service data flow have the same QoS attributes. Some general QoS attributes include, but not limited to, QoS class, priority and bandwidth.

The QoS class may be a QoS concept, for example, a QoS class identifier (QCI) in PCC.

The QoS class may also be a specific QoS class in a certain network, for example, a Traffic Class (including four classes: conversational class, streaming class, interactive class and background class) of the QoS specification in the Universal Mobile Telecommunication System (UMTS).

The QoS class may also be the Differentiated Service Code Point (DSCP), Expedited Forwarding type, or Assured Forwarding type in a Differentiated Services system.

The QoS class may also be a Guaranteed Service and a Controlled-Load Service in an Integrated Services system.

The QoS class may also be the corresponding QoS class in other network systems, or a service class attribute representing a QoS requirement in the future evolution network.

The bandwidth may be a Guaranteed Bit Rate (GBR) and/or a Maximum Bit Rate (MBR). The GBR and MBR may include both uplink rate and downlink rate.

The bearer in the embodiments of the present invention is an IP path with the determined QoS attributes (For example, QoS class, bandwidth and priority) from a UE to a PCEF. The IP address of the bearer is the IP address assigned to the UE by the network for accessing a specific service. The bearer may be a PDP context in the GPRS, an IPSec tunnel in the I-WLAN, an SAE bearer in the SAE/LTE or the related IP path in other systems. A UE may have a plurality of IP addresses (for accessing different APN/PDN services). One UE may be identified by one UE identifier. The same IP address may be shared by a plurality of bearers for transmitting service data flows with different QoS requirements. The Traffic Flow Template of one bearer is a set of flow filters of all service data flows on the bearer. All data packets intended to be routed to the bearer may be matched by the Traffic Flow Template of the bearer.

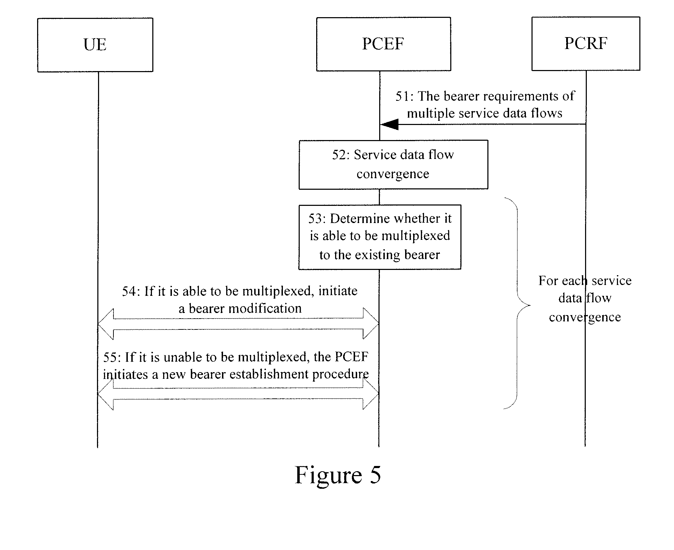

The method of the present invention is hereinafter described in detail with reference to the accompanying drawings. As shown in Fig 5, the handling procedure of the method in accordance with an embodiment of the present invention is as follows.

Step 51: PCEF receives bear requirements of multiple new service data flows. The PCEF may be a GGSN in the GPRS, Inter-AS Anchor or Access Gateway (AGW) in the SAE, a PDG in the I-WLAN or a PDSN in a 3GPP2 network.

The service data flow is a set of IP flows. The IP address of the service data flow which the PCEF receives from the PCRF may be the same or different.

Step 52: The PCEF performs the convergence operation towards the received service data flows according to the related service attributes.

The service data flows for which the PCEF performs the convergence operation must have the same UE identity. The UE identity may be, but not limited to the IP address of UE, IMSI, MSISDN, other UE identity information, or the combination thereof. The convergence is only performed for the service data flows with the same UE identification (for example, the same IP address). The convergence principle is that there are the same related attributes. The related attributes may be the QoS class in the PCC rule, other service data flow attributes, for example, priority, such as Allocation and Retention Priority (ARP), or the combination of service data flow attributes (for example, the combination of QCI and ARP).

For example, the service data flows with the same UE identity (e.g. the same IP address) may be converged according to the QoS class in the service data flows to form the service data flow convergences with different QoS classes. Each service data flow convergence has a uniform QoS class. Other QoS attributes of the service data flow convergence apart from the QoS class may be got by a certain method, for example, the bandwidth may be the sum of bandwidths of all service data flows converged, and the priority may be the priority of the service data flow with the highest priority requirement in the service data flow convergence. The service data flow template of the service data flow convergence may be the set of flow filters of all service data flows converged. For a data packet, it may be determined that the data packet belongs to the service data flow convergence identified by the service data flow template as long as the data packet can be matched to any flow filter in the service data flow template.

For example, the service data flows with the same UE identity (e.g. the same IP address) may be converged according to the combination characteristic of "QoS class + priority" in the service data flows. All service data flows of which the QoS class is a streaming traffic class and the priority is 1 may be converged into a service data flow convergence. All service data flows of which the QoS class is a streaming traffic class and the priority is 2 and 3 may be converged into another service data flow convergence.

The convergence operation may be performed for the service data flows with the same IP address or the service data flows with the same IMSI and different IP addresses.

Step 53: The PCEF determines whether the service data flow convergence may be multiplexed to the established bearer according to the related attributes of the converged service data flow convergence and/or operator policies. If the related attributes of the established bearer accord with those in the service data flow convergence and accord with the related operator policies, the service data flow convergence may be multiplexed to the established bearer, and proceeds to Step 54; otherwise, proceeds to Step 55 to multiplex the service data flow convergence to a newly established bearer.

The service data flow convergence must have the same UE identity as that the established bearer has.

The determination operation may be performed according to the related attributes in the PCC rules independently. The related attributes may be the QoS class, or other attributes of service data flow convergence, or the combination of related attributes of service data flow convergence, such as the combination of QoS class and priority. Taking the QoS class as an example, if the QoS class of the service data flow convergence is the same as that of the bearer, the service data flows may be multiplexed to the bearer. Taking the combination attributes of "QoS class + priority" as an example, the service data flow convergence in which the QoS class is a streaming traffic class and the priority is 2 and 3 may be multiplexed to the established bearer of which the QoS class is a streaming traffic class and the priority is 2.

The determination operation may be performed according to operator policies independently. For example, a policy is constituted for multiplexing all service data flow convergences of an IP address of a UE to an established bearer of which the QoS class is a background traffic class.

The related attributes in the PCC rules and the operator policies may be taken into consideration in the determination operation simultaneously. For example, the related attributes are set as the QoS class, and the operator policies are defined as that service data flow convergences with all priorities are multiplexed to one bearer. Therefore, with respect to the above related attributes and operator policies, the service data flow convergences of which the QoS class is a streaming traffic class and the priority is any value are multiplexed to the established bearer of which the QoS class is a streaming traffic class.

If what received by the PCEF is a service data flow convergence obtained by means of the convergence operation, and the PCEF determines that it is not necessary to converge again, the PCEF performs the determination operation towards the received service data flow convergence directly.

For example, the PCRF converges according to QoS requirements of service data flows to generate each service data flow convergences with different QoS classes, and sends the service data flow convergence to the PCEF. After receiving the service data flow convergence, the PCEF performs the determination operation towards the service data flow convergence directly without converging again.

The service data flow convergence may be a service data flow itself, i.e. the PCEF performs the determination operation towards a service data flow by taking the service data flow as a service data flow convergence without any operation towards the service data flow.

Step 54: When determining that the service data flow convergence is able to be multiplexed to the established bearer, the PCEF selects the established bearer, initiates a modification of the established bearer, and converges the service data flow through the modified bearer.

The modification of a bearer mainly includes updating the Traffic Flow Template information and the bandwidth information of the bearer.

Updating the Traffic Flow Template information of bearer mainly includes adding the service data flow template information of a new service flow convergence to the Traffic Flow Template information of the multiplexed bearer, to form the new Traffic Flow Template information of the modified bearer. For example, the service data flow template of the new service flow convergence includes two pieces of flow filter information (filter1 and filter2). The Traffic Flow Template of the multiplexed bearer includes three pieces of flow filter information (filter3, filter4 and filter5) before the new service flow convergence is multiplexed to the established bearer. Therefore, the new Traffic Flow Template of the modified bearer includes five pieces of flow filter information (filter1, filter2, filter3, filter4 and filter5).

Modification of the bandwidth information of a bearer includes adding the bandwidth requirement of the new service flow convergence to the bandwidth attributes of the established bearer, to form the bandwidth attributes of the modified bearer. The bandwidth, for example, guaranteed bit rate (GBR) of the new service flow convergence is 10kb/s, the GBR of the established bearer before the new service flow convergence is multiplexed is 15kb/s, and the GBR of the modified bearer is 25kb/s.

The bearer modification further includes notifying the nodes on the bearer path of the updated bearer information. The nodes include a User Equipment (UE), access gateway nodes (e.g. RNC, SGSN, MME/UPE and WAG) and gateway nodes (e.g. GGSN and Inter-AS Anchor). Furthermore, the bearer modification further includes notifying the function entities such as the PCRF and AF of the updated bearer information. The nodes and function entities perform the corresponding handling after acquiring the updated bearer information.

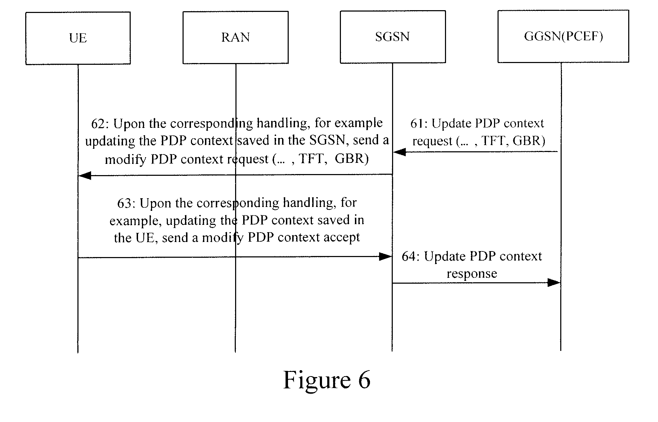

As shown in Figure 6, a bearer modification procedure in the GPRS is as follows.

Step 61: Upon determining that a service data flow convergence can be multiplexed to an existing PDP context according to the related attributes and the operator policies, the GGSN (PCEF) sends to SGSN an update PDP context request message carrying the updated bearer information (including the TFT and GBR information).

Step 62: Upon receiving the update PDP context request message, the SGSN handles as follows: updates the PDP context saved in the SGSN, including TFT and GBR, according to parameter values carried in the update PDP context request message, and initiates an RAB modification at the RAN side according to such parameter values.

The SGSN further sends to the UE a modify PDP context request message carrying the updated bearer information, including TFT and GBR information.

The TFT information contains the bearer binding relation of uplink traffic, in other words, the UE carries the corresponding uplink traffic into the specific PDP context according to the TFT information.

Step 63: Upon receiving the modify PDP context request message, the UE handles as follows: updates the PDP context saved in the UE, including TFT and GBR information, according to parameter values carried in the modify PDP context request message, and binds the service data flow with the bearer and allocates the corresponding resources according to such parameter values.

The UE further sends a modify PDP context accept message to the SGSN.

Step 64: Upon receiving the modify PDP context accept message, the SGSN further sends an update PDP context response message to the GGSN.

In the procedure as shown in Figure 6, the Traffic Flow Template is represented by the TFT and the bandwidth information is represented by the GBR. The TFT of the PDP context in the message in Steps 61 and 62 has been updated, which includes the service data flow template information of the service flow convergence necessary to be carried. The bandwidth information also includes the bandwidth information of the service flow convergence necessary to be carried. After Step 64 is completed, a new service flow convergence may be transmitted in the updated PDP context.

Step 55: When determining that the service flow convergence is unable to be carried in the established bearer, the PCEF initiates a new bearer establishment procedure, and carries the service flow convergence in the newly established bearer.

The bearer establishment process initiated by the PCEF may adopt a bearer establishment procedure initiated by the network or the UE. Such two procedures are hereinafter described, respectively.

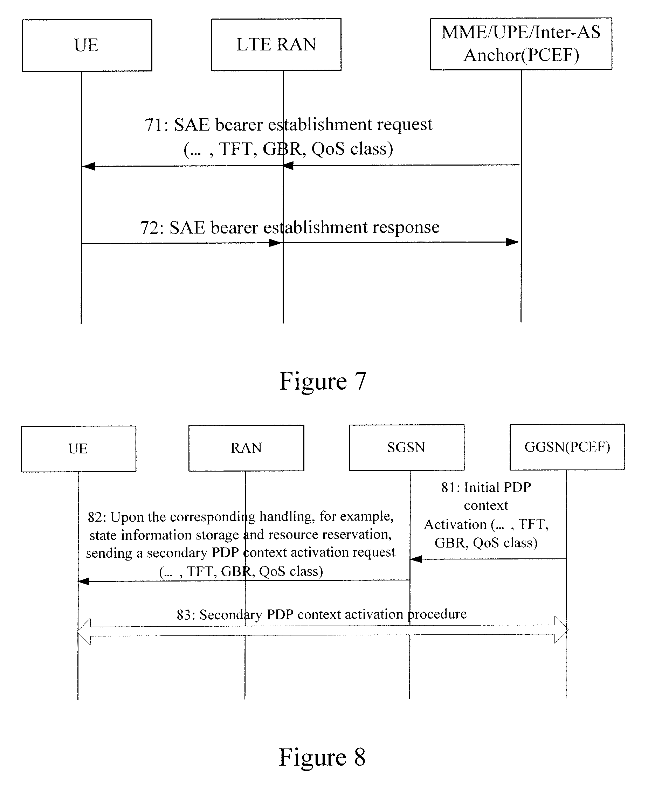

As shown in Figure 7, a bearer establishment procedure initiated by the network and implemented by means of the SAE is as follows.

Step 71: Upon determining that it is necessary to establish an SAE bearer for a service data flow convergence according to the related attributes and operator policies, the PCEF sends to the corresponding nodes on the bearer path an SAE bearer establishment request message carrying the parameter information (including TFT, GBR and QoS class) necessary for establishing the SAE bearer. Upon receiving the SAE bearer establishment request message, the corresponding nodes perform the corresponding handling (including establishing the corresponding SAE bearer state information and allocating resources), and continuously forward the SAE bearer establishment request message to the UE.

The TFT information contains the bearer binding relation of uplink traffic, in other words, the UE carries the corresponding uplink traffic in a specific SAE bearer according to the TFT information. In addition, a flow filter, a set of flow filters or other flow filters may be used for identifying the binding relation between the uplink traffic and the SAE bearer.

The "SAE bearer establishment request message" may also be represented by other names or be the combination of multiple messages, for example, different messages are adapted between UE and ENodeB, ENodeB and MME/UPE, and MME and UPE-Inter-AS Anchor.

Step 72: Upon receiving the SAE bearer establishment request message, the UE performs the corresponding handling, according to the bearer parameters (including TFT, GRB and QoS class) carried in the SAE bearer establishment request message. The corresponding handling includes: binding service-bearers, establishing the bearer state information and allocating resources, and returning an SAE bearer establishment response message to the PCEF along the bearer path. Upon receiving the SAE bearer establishment response message, the corresponding nodes on the bearer path perform the corresponding handling, and continuously forward the SAE bearer establishment response message to the PCEF.

In the bearer establishment procedure as shown in Figure 7, the service data flow template information of a service data flow is represented by the TFT, and the bandwidth information only includes the GBR information. Since the PCEF is always disposed in the IP service gateway of a UE and the IP service gateway may be disposed in the UPE or Inter-AS Anchor, the PCEF may be disposed in the MME/UPE or Inter-AS Anchor. In addition, the current bearer establishment procedure of SAE/LTE is not specified. However, no matter which message procedure is adapted, the SAE bearer establishment request message sent to the corresponding nodes (including UE, access gateway node, e.g., RNC, SGSN, MME/UPE and WAG) on the bearer path and initiated by the network needs to carry the service data flow template information, bandwidth information and QoS class information of the service flow convergence of a new bearer.

As shown in Figure 8, a bearer establishment procedure initiated by the UE and implemented by means of the GPRS is as follows.

Step 81: Upon determining that it is necessary to establish a PDP context for a service data flow convergence according to the related attributes and the operator policies, the GGSN (PCEF) sends to the SGSN an initial PDP context activation message carrying the related parameter information (including TFT, GBR and QoS class) of the PDP context necessary to be newly established. The "initial PDP context activation message" may also be represented by other names.

Step 82: Upon receiving the initial PDP context activation message, the SGSN performs the corresponding handling: storing state information, performing the resource reservation and sending to the UE a secondary PDP context activation request message. The secondary PDP context activation request message contains the related parameter information (including TFT, GBR and QoS class) of the PDP context necessary to be newly established. The "secondary PDP context activation request message" may also be represented by other names.

Step 83: Upon receiving the secondary PDP context activation request message, the UE performs the corresponding handling, including: establishing the bearer state information, reserving the resource and initiating a GPRS secondary PDP context activation procedure in the network. The related parameters of the related messages in this procedure are valued according to the corresponding parameters in the secondary PDP context activation request message received by the UE.

The above secondary PDP context activation procedure initiated by the UE is identical to the existing GPRS procedure apart from the difference that the related messages (secondary PDP context activation request message and secondary PDP context establishment request message) may not carry TFT information. This is because the downlink flow-bearer binding relation is determined by the network side (PCRF and/or PCEF) instead of the UE, while the conventional GPRS procedure is determined by the UE.

In a bearer establishment procedure as shown in Figure 8, the PCEF is disposed in the GGSN, and sends information, including the service data flow template information, bandwidth information and QoS class of the service flow convergence of the bearer necessary to be established, to the corresponding nodes on the bearer path, including user equipment and an access gateway node (e.g., RNC, SGSN, MMR/UPE and WAG) through the two messages in Steps 81 and 82. In Step 83, the UE triggers the practical operation for activating the bearer necessary to be established. The message procedure of the existing GPRS may be directly adapted in Step 83, and only the carried information is different. After Step 83, the service flow convergence may be carried in a PDP context of the newly established bearer.

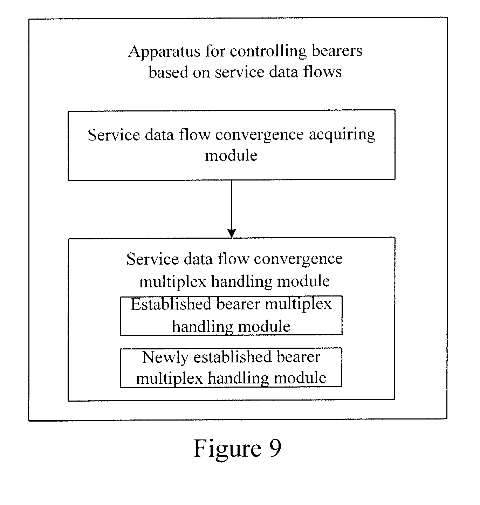

As shown in Figure 9, an apparatus for controlling bearers of service data flows in accordance with an embodiment of the present invention includes the following modules:
a service data flow convergence acquiring module, adapted to acquire a service data flow convergence of service data flows, and transmit the service data flow convergence to a service data flow convergence multiplex handling module, in which:
   The service data flow convergence acquiring module may converge the received multiple service data flows according to the related attributes of the service data flows, so as to acquire the service data flow convergence of the service data flows, or acquire the service data flow convergence of the service data flow from other network side entities, such as a policy and charging rule function entity, directly;
   the convergence operation may only be performed for the service data flows with the same UE identity. The related attributes may be the QoS class of service data flow, other service data flow attributes (e.g. priority) or the combination of service data flow attributes (e.g. the combination of QoS class and priority); and
   a service data flow convergence multiplex handling module, adapted to determine whether the service data flow convergence transmitted by the service data flow convergence acquiring module may be multiplexed to an established bearer, and carry the service data flow convergence in the corresponding bearer according to the determining result. The service data flow convergence multiplex handling module includes: an established bearer multiplex handling module and a newly established bearer multiplex handling module, in which:
      the established bearer multiplex handling module is adapted to initiate a modification procedure of the established bearer and carry the service data flow convergence in the modified bearer when the service data flow multiplex handling module determines that the service data flow convergence may be multiplexed to the established bearer.
      the newly established bearer multiplex handling module is adapted to initiate a procedure for establishing a new bearer and carry the service data flow convergence in the newly established bearer when the service data flow multiplex handling module determines that the service data flow convergence may not be multiplexed to the established bearer.

Embodiments of the present invention provide a new method for controlling bearers of service data flows, which makes the bearer binding of a new service flow more flexible. By converging service data flows with the same QoS class and multiplexing the service data flow convergence to the existing bearer, it is possible to reduce the bearer information amount necessary to be maintained by various network entities and save the storage and handling resources of system. In addition, by multiplexing the service data flow convergence to the bearer, it is possible to quicken the speed for establishing an upper layer session greatly, thereby increasing the service experience of subscribed users.

The foregoing are only exemplary embodiments of the present invention. The protection scope of the present invention, however, is not limited to the above description. Any change or substitution, within the technical scope disclosed by the present invention, easily occurring to those skilled in the art should be covered by the protection scope of the present invention. Therefore, the protection scope of the present invention should be compatible with the protection scope stated by claims.

## Claims

1. A method for controlling bearers of service data flows, comprising:
acquiring, by a policy and charging enforcement function entity, a service data flow convergence; and
determining whether the service data flow convergence is able to be multiplexed to an established bearer, and carrying the service data flow convergence in a bearer according to the determining result.

2. The method of Claim 1, wherein the acquiring the service data flow convergence comprises:
performing a convergence operation towards the service data flows with the same user equipment identity in the multiple service data flow according to the related attributes of the service data flow to acquire the service data flow convergence, upon receiving the bear requirements of multiple service data flow convergences; or
receiving the service data flow convergence, wherein the service data flow convergence is obtained by performing a convergence operation towards multiple service data flows received by a policy and charging rule function entity and sent from the policy and charging rule function entity.

3. The method of Claim 2, wherein the related attributes comprise at least one of the three items: Quality of Service, QoS, class, priority and bandwidth.

4. The method of Claim 1 or 2, wherein the bandwidth of the service data flow convergence is the sum of bandwidth of all service data flows converged; the priority of the service data flow convergence is the priority of the service data flow with the highest priority requirement in all service data flows converged; the service data flow template of the service data flow convergence is a set of flow filters of all service data flows converged.

5. The method of Claim 1 or 2, wherein the determining whether the service data flow convergence is able to be multiplexed to the established bearer and carrying the service data flow convergence in the bearer according to the determining result comprises:
determining whether the service data flow convergence is able to be multiplexed to the established bearer; modifying the established bearer and carrying the service data flow convergence in the modified bearer if the service data flow convergence is able to be multiplexed to the established bearer; otherwise, initiating a new bearer establishment procedure, and carrying the service data flow convergence in the newly established bearer.

6. The method of Claim 5, wherein determining whether the service data flow convergence is able to be multiplexed to the established bearer comprises:
determining whether the service data flow convergence received is able to be multiplexed to the established bearer according to the related attributes of the service data flow convergence and/or operator policies.

7. The method of Claim 5, wherein the modifying the established bearer comprises:
adding service data flow template information of the service flow convergence to the Traffic Flow Template information of the established bearer to form new Traffic Flow Template information of the modified bearer; and
adding the bandwidth requirement of the service flow convergence to the bandwidth attributes of the established bearer to form the bandwidth attributes of the modified bearer.

8. The method of Claim 5, wherein the initiating a new bearer establishment procedure and carrying the service data flow convergence in the bearer comprises:
establishing a new bearer through adapting the new bearer establishment procedure initiated by the network or a user, and carrying the service data flow convergence in the newly established bearer.

9. An apparatus for controlling bearers of service data flows, comprising:
a service data flow convergence acquiring module adapted to acquire the service data flow convergence of service data flows, and transmit the service data flow convergence; and
a service data flow convergence multiplex handling module adapted to determine whether the service data flow convergence transmitted by the service data flow convergence acquiring module is able to multiplexed to an established bearer, and carry the service data flow convergence in a bearer according to the determining result.

10. The apparatus of Claim 9, wherein the service data flow convergence acquiring module performs a convergence operation towards the received service data flows according to the related attributes of the service data flows, and acquires the service data flow convergence of the service data flows.

11. The apparatus of Claim 9 or 10, wherein the service data flow convergence multiplex handling module comprises:
an established bearer multiplex handling module adapted to initiate a modification procedure of the established bearer and carry the service data flow convergence in the modified bearer when the service data flow multiplex handling module determines that the service data flow convergence is able to be multiplexed to the established bearer; and
a newly established bearer multiplex handling module adapted to initiate a procedure for establishing a new bearer and carrying the service data flow convergence in the newly established bearer when the service data flow multiplex handling module determines that the service data flow convergence is unable to be multiplexed to the established bearer.
